# EUROPEAN PATENT APPLICATION

(11) **EP 2 682 928 A1**
(43) Date of publication of application: **08.01.2014**
(21) Application number: 12175076.4
(22) Date of filing: 05.07.2012
(51) Int. Cl.: G08G 1/0967, G08G 1/0962, B60Q 1/54

(54) **Device with means for generating warning signals in the cabin of an automobile**

(71) Applicant: Aktiebolaget SKF, 41 550 Göteborg (SE)
(72) Inventor: Dubus, Jerome, 37520 LA RICHE (FR)
(74) Representative: Burö, Sven Peter

(57) **Abstract**

The invention starts from a device with means (10, 12) for generating and/or displaying acoustic and/or visual warning signals for the attention of a driver in the cabin of an automobile including a storage unit (14) for storing signal data files for the acoustic and/or visual signals and user preferences for the selection of the signal data files, and a control unit (16) configured to detect dangerous traffic situations and to select one or more of the data files for the signal generation based in the user preferences.

In order to further improve the effectiveness of the warning signals, it is proposed to provide the device with a data interface (18) for uploading or means for creating personalized signal data files created by the driver, wherein the control unit (16) is configured to generate or display a warning signal corresponding to the personalized signal data file when at least one type of dangerous traffic situation is detected.

## Description

Device with means for generating and/or displaying acoustic and/or visual warning signals for the attention of a driver in the cabin of an automobile according to the preamble of claim 1.

Means for generating warning signals for the attention of a driver in the cabin of an automobile are widely spread and are included e.g. in car navigation systems, cruise control systems, parking assist systems, systems controlling the distance to a preceding vehicle or the like. The signal is generated visually using a warning lamp or any kind of display and/or acoustically.

Further, it is known to provide means for setting user preferences for the signals. In car navigation systems the user preferences may e.g. include language settings, the selection of the voice giving the navigation instructions (e.g. male voice or female voice), loudness levels for the sound or brightness levels for the visual warning signal.

Despite of these possibilities, drivers get used to the warning signals and are likely not to pay sufficient attention to the signals, in particular when the drivers are getting tired. One of the reasons is that the preset signals are not emotionally touching to a sufficient degree.

Despite of the improved security technology, the number of deadly accidents is still high and could be reduced if only the drivers would reliably observe the statutory speed limits. The invention is based on the problem of providing a device of the generic type described above allowing for an enlarged spectrum of personalization of the warning signal such that the latter can be truly individualized and optimized by the driver by setting the signal such that it is maximally effective for him.

The invention starts from a device with means for generating and/or displaying acoustic and/or visual warning signals for the attention of a driver in the cabin of an automobile including a storage unit for storing signal data files for the acoustic and/or visual signals and user preferences for the selection of the signal data files and a control unit configured to detect dangerous traffic situations and to select one or more of the data files for the signal generation based in the user preferences.

In order to further improve the effectiveness of the warning signals, it is proposed to provide the device with a data interface for uploading or means for creating personalized signal data files created by the driver, wherein the control unit is configured to generate or display a warning signal corresponding to the personalized signal data file when at least one type of dangerous traffic situation is detected.

The possibility of creating or uploading data files such as sound files with the voices of the driver's children or relatives, photographs of his family or the like may lead to the choice of an emotionally most touching warning signal and to the more strict observation of speed limits and other rules for traffic safety.

The means for creating the data file may include a camera - e.g. in a mobile phone, smartphone or other mobile device, a painting program for children installed in such a device or a voice recorder for recording the warning signal.

Further, it is proposed to provide the device with a system - in particular with a car navigation system - configured to detect the dangerous traffic situation.

The system may use speed limit information retrieved from map data or automatic recognition of traffic signs, traffic information, and measurement data of tachometers, velocity sensors, acceleration sensors or distance sensors installed in the device or in the automobile together with pertinent threshold values.

The device may be embodied as a vehicle-mounted or as a mobile mobile/portable device. In the first case, it may be a separate unit communicating with an on-board computer of the automobile or implemented in the latter. In the case of a mobile, portable device, the device may be a standalone warning device or the functions according to the invention can be implemented in a portable car navigation system or mobile phone or smartphone, wherein the latter should preferably be equipped with a sensor for a positioning system (e.g. GPS) and/or with a navigation functionality.

Examples for detection criteria include the detection of a dangerous situation upon exceeding a speed limit, the detection of a dangerous driving style based on the signals of an acceleration sensor indicating e.g. that the driver did not sufficiently decelerate before driving into a curve or based on the signal of a distance sensor indicating that the driver does not keep a sufficient distance to the vehicle in front of him or combinations of these criteria.

The communication channels between device and sensors in the case of vehicle-mounted device may be achieved using a bus system of the automobile. Alternatively, a wireless link may be created using a local network moving with the automobile or via a terrestrial communication network.

In a preferred embodiment of the invention, it is proposed to provide the device with means for comparing an actual speed of the automobile with a predetermined threshold speed, wherein the control unit is configured to detect the actual traffic situation when the actual speed exceeds the predetermined threshold speed.

Further, it is proposed that the data interface is a wireless data interface for local data transmission such as Bluetooth or other standards under IEEE 802. Further, it is possible that the device is provided with a modem for communicating with a telephone or data network such as UMTS, HSPA, LTE or LTE advanced and/or via other channels with the internet and to upload the data file via such channels.

In the alternative, the device may be provided a wire-based interface such as USB or another serial or parallel data interface. In a preferred embodiment of a vehicle-mounted device according to the invention, the interface is arranged in a control panel of the automobile so as to be accessible for the driver when the driver is sitting in the driver's seat.

Preferably, the data interface is a universal interface for connecting portable data storage devices such that a large variety of storage devices may be used for uploading the data file.

If the personalized signal data file is an image file, the control unit is preferably configured to display the image file while generating an acoustic warning signal as the warning signal.

If the personalized signal data file is a sound file, the control unit is preferably configured to play the sound file while displaying a visual warning signal as the warning signal.

If the personalized signal data file is an image file, the control unit is preferably configured to display the image file on a dashboard of the automobile and/or on a head-up display of the automobile if available.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.
- Fig. 1: is a mobile device according to a first embodiment of the invention;
- Fig. 2: is a portable car navigation device according to a second embodiment of the invention; and
- Fig. 3: is a vehicle-mounted according to a third embodiment of the invention.

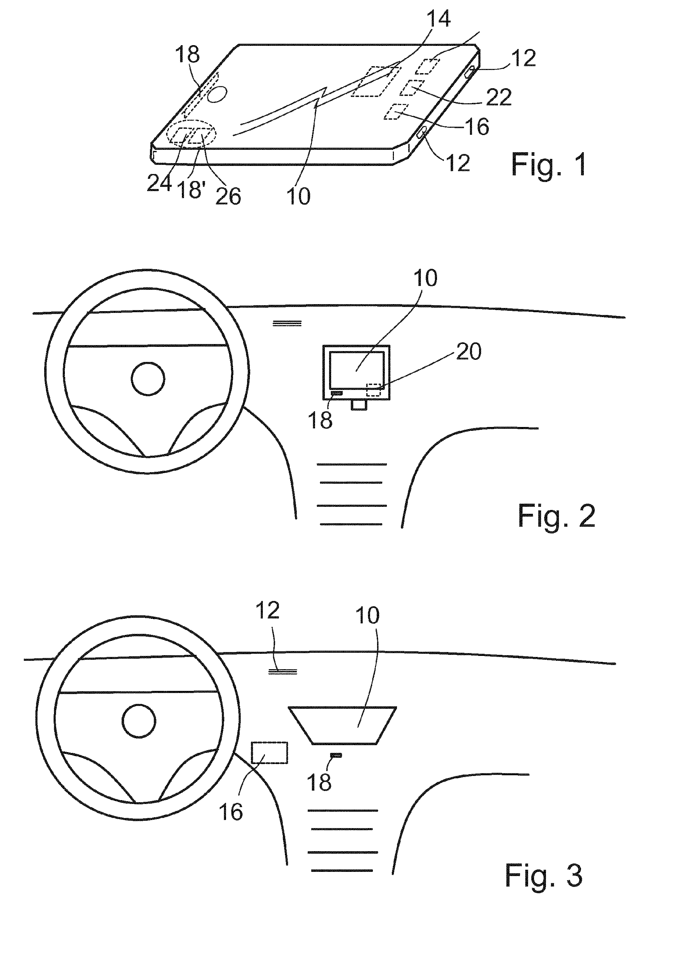

Fig. 1 is a mobile device according to a first embodiment of the invention. The mobile device is a smartphone equipped with a GPS receiver 20, an acceleration sensor 22 and various applications including a map application with a functionality of serving as a car navigation system using map data in combination with the signal of the GPS receiver 20. A holder (not illustrated) for the smartphone is provided on the dashboard of an automobile or the smartphone may be simply placed below the front windshield of the car.

The device comprises loudspeakers 12 and a display 10 as means for generating and displaying acoustic and visual warning signals for the attention of a driver in the cabin of the automobile and includes a storage unit 14 for storing signal data files for the acoustic and/or visual signals as well as user preferences for the selection of the signal data files.

Based on the map data and the GPS signals, a control unit 16 of the device calculates the actual driving speed of the automobile and compares this speed with a speed limit derived from the map data of the map application. If the actual speed exceeds the speed limit, the control unit 16 recognizes a dangerous traffic situation and to select one or more of the data files from the storage unit 14 for the signal generation based on the user preferences.

The detection of dangerous traffic situations is not limited to speed limits but could also include warning signals triggered by warning messages in a radio traffic information system or retrieved from the internet or a mobile communication network, warning signals triggered by an evaluation of signals of the acceleration sensor 22 indicating strong transversal accelerations.

The device has data interface 18 for uploading personalized signal data files as well as a camera (not illustrated), a paint application and an audio recording function for creating personalized signal data files created by the driver to the storage unit 14. In a setup mode, the driver can set the configuration of his personalized alarm signal by selecting the audio file, a video file of a sound file among the uploaded or pre-set signal data files in the storage unit 14.

These files might e.g. include image files showing photographs of the driver's children or a sound file with the voices of the children reminding the driver that he has a lot to lose in a deadly accident. The control unit 16 is configured to generate or display a warning signal corresponding to the personalized signal data file when at least one type of dangerous traffic situation is detected.

The car navigation system or car navigation application may itself be configured to detect the dangerous traffic situations of various type and the warning signal application of the invention may rely on the result of this detection.

The smartphone is further equipped with a W-LAN interface 24 and a Bluetooth interface 26 serving as wireless data interface 18' enabling a wireless upload of warning signal data files.

If the driver has selected an image file as his preferred personalized signal data file in the user preferences, the control unit 16 will display the image file while generating a preset or customized acoustic warning signal as the warning signal.

If the driver has selected a sound as his preferred personalized signal data file in the user preferences, the control unit 16 will play the sound file while displaying a preset or customized visual warning signal as the warning signal.

Figs. 2 - 3 show further embodiments of the invention. The following description focusses on differences to the embodiment of Fig. 1, wherein the reader is referred to the above description of the embodiment of Fig. 1 for unchanged or similar features. Similar or identical features are provided with the same reference numbers in order to emphasize the similarities.

Fig. 2 shows a portable car navigation device with a display 10 and with a holder 28 for mounting the device onto the dashboard of the automobile. The car navigation device is not equipped with an acceleration sensor and detects the dangerous traffic situation based on the velocity signals derived from position signals of a GPS sensor 20 only.

Fig. 3 is a vehicle-mounted according to a second embodiment of the invention. In the second embodiment, the device is integrated with the on-board computer 16 of the automobile and uses a display 10 on its dashboard and the speakers 12 of the car stereo system as means generating and/or displaying acoustic and/or visual warning signals for the attention of a driver.

Alternatively, the control unit 16 may use a head-up display 10' of the automobile for displaying the image data file or may use an audio headset with Bluetooth functionality worn by the driver for generating the acoustical warning signal.

The data interface 18 is a USB interface arranged in the control panel of the automobile so as to be accessible for the driver when the driver is sitting in the driver's seat together with suitable buttons for setting the user preferences discussed above. The data interface 18 is a standard interface for connecting portable data storage devices, which may include a photo camera with a memory card or a USB stick.

Instead of determining the velocity of the car based on the GPS signals, the device uses the velocity data available in the Bus system of the car for use in the engine and transmission control or for a cruise control in the on-board computer. The same applies likewise for the acceleration signal, optionally including a transversal acceleration of the automobile.

The warning functionality may be linked to a built-in car navigation system and use the display 10 and sound output options of the latter.

In all the embodiments, the storage device may be configured such that the personalized warning signal data files are stored in a common data structure with other user settings and preferences. The automobile may be provided with a system allowing for the automatic identification of the driver, e.g. based on a weight sensor in a driver's seat, identification information in or on a car key or the detection of a personal driving style. The user preferences may include settings for the seat position, settings for the automatic or semi-automatic transmission reflecting the preferred driving style (e.g. comfortable or sporty) of the driver, settings for the positions of the rear view mirrors, settings for preferred radio stations or music playlists of the car audio system and the like.

## Claims

1. Device with means (10, 12) for generating and/or displaying acoustic and/or visual warning signals for the attention of a driver in the cabin of an automobile including a storage unit (14) for storing signal data files for the acoustic and/or visual signals and user preferences for the selection of the signal data files, and a control unit (16) configured to detect dangerous traffic situations and to select one or more of the data files for the signal generation based in the user preferences,
**characterized by** further comprising a data interface (18) for uploading or means for creating personalized signal data files created by the driver, wherein the control unit (16) is configured to generate or display a warning signal corresponding to the personalized signal data file when at least one type of dangerous traffic situation is detected.

2. Device according to claim 1,
**characterized by** comprising a car navigation system configured to detect the dangerous traffic situation.

3. Device according to claim 1 or 2,
**characterized by** comprising means for comparing an actual speed of the automobile with a predetermined threshold speed, wherein the control unit (16) is configured to detect the actual traffic situation when the actual speed exceeds the predetermined threshold speed.

4. Device according to one of the previous claims,
**characterized in that** the data interface (18) is a wireless data interface.

5. Device according to one of the previous claims,
**characterized in that** the data interface (18) is arranged in a control panel of the automobile so as to be accessible for the driver when the driver is sitting in the driver's seat.

6. Device according to one of the previous claims,
**characterized in that** the data interface (18) is a universal interface for connecting portable data storage devices.

7. Device according to one of the previous claims,
**characterized in that** the personalized signal data file is an image file, wherein the control unit (16) is configured to display the image file while generating an acoustic warning signal as the warning signal.

8. Device according to one of the previous claims,
**characterized in that** the personalized signal data file is a sound file, wherein the control unit (16) is configured to play the sound file while displaying a visual warning signal as the warning signal.

9. Device according to one of the previous claims,
**characterized in that** the personalized signal data file is an image file, wherein the control unit (16) is configured to display the image file on a dashboard of the automobile.

10. Device according to one of the previous claims,
**characterized in that** the personalized signal data file is an image file, wherein the control unit (16) is configured to display the image file on a head-up display (10') of the automobile.
